(19) Europäisches Patentamt
European Patent Office
Office européen des brevets

(11) **EP 1 849 032 B1**

(12) **FASCICULE DE BREVET EUROPEEN**

(45) Date de publication et mention
de la délivrance du brevet:
**19.12.2012 Bulletin 2012/51**

(51) Int Cl.:
***G02B 7/08*** *(2006.01)*    ***F03G 7/06*** *(2006.01)*
***G02B 7/02*** *(2006.01)*

(21) Numéro de dépôt: **06709285.8**

(22) Date de dépôt: **09.02.2006**

(86) Numéro de dépôt international:
**PCT/FR2006/000300**

(87) Numéro de publication internationale:
**WO 2006/085002 (17.08.2006 Gazette 2006/33)**

(54) **DISPOSITIF D'ACTIONNEMENT A RONDELLES BILAMES**

BETÄTIGUNGSEINRICHTUNG MIT BIMETALLSCHEIBEN

ACTUATING DEVICE COMPRISING BIMETAL DISKS

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **14.02.2005 FR 0501474**

(43) Date de publication de la demande:
**31.10.2007 Bulletin 2007/44**

(73) Titulaire: **SAGEM Défense Sécurité
75015 Paris (FR)**

(72) Inventeurs:
• **PICHON, Guillaume**
  **F-75017 Paris (FR)**
• **MARTINEZ, Alain**
  **F-95550 Bessancourt (FR)**

(74) Mandataire: **Cabinet Plasseraud
52, rue de la Victoire
75440 Paris Cedex 09 (FR)**

(56) Documents cités:
**EP-A2- 0 187 232    US-A- 3 503 004
US-A- 4 861 137    US-B1- 6 650 412**

EP 1 849 032 B1

**Description**

L'invention concerne un dispositif d'actionnement thermique.

Les problèmes auxquels ont été confrontés les inventeurs se sont posés dans le domaine de l'optique, bien que l'invention ne soit pas limitée à ce champ d'application.

Certains systèmes optiques sont destinés à fonctionner sur une plage étendue de température (par exemple de l'ordre de -60°C environ à +100°C environ). Dans ces montages, il apparaît nécessaire de compenser les déplacements, contractions et/ou dilatation des optiques de focalisation ainsi que leurs variations d'indice, même infimes, dues aux variations thermiques, afin de conserver intactes les performances du système.

A titre d'exemple, citons les systèmes optiques destinés à l'imagerie infrarouge, dans lesquels certains matériaux choisis pour les optiques de focalisation (généralement du Germanium) se révèlent assez sensibles aux variations thermiques.

Il est connu de compenser les déplacements, dilatations ou contractions des optiques de focalisation au moyen de systèmes actifs (comprenant des moteurs commandés par une unité de calcul avec rétroaction), ou passifs (comprenant par exemple des systèmes à bilames, tel que proposé dans le brevet américain US-4,861,137 ou encore des systèmes employant des matériaux à fort coefficient de dilatation, tel que proposé dans le brevet américain US-6,292,312).

Les systèmes actifs présentent l'inconvénient majeur de nécessiter une alimentation en courant et la mise en place d'une boucle de rétroaction permettant à une unité de calcul de corriger au moyen des moteurs les variations dimensionnelles ou de position auxquelles sont soumises les optiques de focalisation.

Quant aux systèmes du type proposé dans le document US-4,861,137, ils présentent l'inconvénient d'être limités en débattement. En outre, dans le cas particulier du montage décrit dans le document précité, il peut se poser un problème de conservation du parallélisme entre l'axe de l'optique de focalisation dont le dispositif de compensation assure le déplacement, et l'axe optique du système dans son ensemble. Les systèmes passifs tels que ceux décrits dans le document EP 0 187 232, plus particulièrement ceux employant des matériaux à fort coefficient de dilatation, ont l'inconvénient de présenter une plage de déformation linéaire étroite par rapport à la plage d'utilisation requise.

L'invention vise notamment à remédier aux inconvénients précités, en proposant un dispositif d'actionnement thermique passif, c'est-à-dire ne nécessitant aucune alimentation externe en énergie, et qui présente des capacités accrues en déplacement.

A cet effet, l'invention propose un dispositif d'actionnement thermique comprenant :

- au moins deux rondelles bilames coaxiales, et

- au moins une entretoise axiale interposée entre les rondelles, et qui se caractérise en ce que lesdites rondelles bilames sont montées en opposition l'une par rapport à l'autre, et aptes à se déformer dans des sens opposés en fonction des variations thermiques.

Un tel dispositif est déformable en fonction des variations thermiques, entre :

- une première configuration, dite convexe, dans laquelle les rondelles sont bombées à l'opposé l'une de l'autre, le dispositif adoptant en section une forme en O plus ou moins ouvert suivant l'importance de la variation thermique, et

- une seconde configuration, dite concave, dans laquelle les rondelles sont creusées l'une vers l'autre, le dispositif adoptant en section une forme en X plus ou moins aplati suivant l'importance de la variation thermique.

Suivant un premier sens du montage des rondelles, le dispositif tend à devenir convexe lorsque la température croît, et concave lorsqu'au contraire la température décroît. Suivant un deuxième sens de montage, ce comportement est inversé.

De la sorte, on cumule les déplacements dus aux déformations de chacune des rondelles bilames. Il en résulte une plus grande amplitude des déplacements permis par ce dispositif par rapport aux dispositifs connus, ainsi qu'une plage de déformation linéaire élargie.

Suivant un mode de réalisation, l'entretoise est placée à proximité de bords périphériques des rondelles.

L'entretoise se présente par exemple sous la forme d'un manchon cylindrique, coaxial aux rondelles bilames.

Le dispositif peut comporter en outre au moins une seconde entretoise adjacente à l'une des rondelles bilames, située du côté de celle-ci opposé à l'entretoise située entre les rondelles bilames, et décalée radialement par rapport à cette entretoise.

Suivant un mode préféré de réalisation, le dispositif comporte deux entretoises externes placées de part et d'autre des rondelles bilames, et décalées radialement par rapport à l'entretoise située entre les rondelles bilames.

Suivant un autre aspect, l'invention propose un système comprenant :

- un bâti,
- une pièce montée mobile en translation par rapport au bâti, et
- un dispositif d'actionnement thermique à bilames tel que décrit ci-dessus, interposé entre le bâti et la pièce mobile, propre à déplacer celle-ci par rapport au bâti en fonction des variations thermiques.

Suivant un mode de réalisation, le système optique comporte deux dispositifs d'actionnement thermique disposés de part et d'autre de la pièce. En variante, un ressort de rappel, couplé au dispositif d'actionnement thermique, est interposé entre le bâti et la pièce.

Suivant encore un autre aspect, l'invention propose un système optique comprenant :

- un bâti,
- un support monté mobile en translation par rapport au bâti, et sur lequel est montée au moins une lentille, et
- un dispositif d'actionnement thermique à bilames tel que décrit ci-dessus, interposé entre le bâti et le support, propre à déplacer celui-ci par rapport au bâti en fonction des variations thermiques.

Suivant un mode de réalisation, le système optique comporte deux dispositifs d'actionnement thermique disposés de part et d'autre du support. En variante, un ressort de rappel, couplé au dispositif d'actionnement thermique, est interposé entre le bâti et le support.

D'autres objets et avantages de l'invention apparaîtront à la lumière de la description faite ci-après en référence aux dessins annexés dans lesquels :

- la figure 1 est une vue en coupe illustrant un système optique équipé d'un dispositif d'actionnement thermique selon l'invention ;
- la figure 2 est une vue en coupe similaire à la figure 1, illustrant un système optique équipé de deux dispositifs d'actionnement thermique selon l'invention, fonctionnant en parallèle ;
- la figure 3 est une vue en coupe de détail du système de la figure 1 ;
- la figure 4 est une vue en coupe illustrant un dispositif d'actionnement thermique selon l'invention, dans une position médiane ;
- les figures 5 et 6 sont des vues similaires à la figure 4, montrant le dispositif d'actionnement thermique de la figure 4 dans une position convexe, et dans une position concave, respectivement ;
- la figure 7 est une vue en plan montrant une rondelle bilame ;
- la figure 8 est une vue en coupe de la rondelle bilame de la figure 7, représentée non déformée en traits pleins et déformée en traits interrompus ; et
- la figure 9 est une vue analogue à la figure 5, suivant une variante de réalisation.

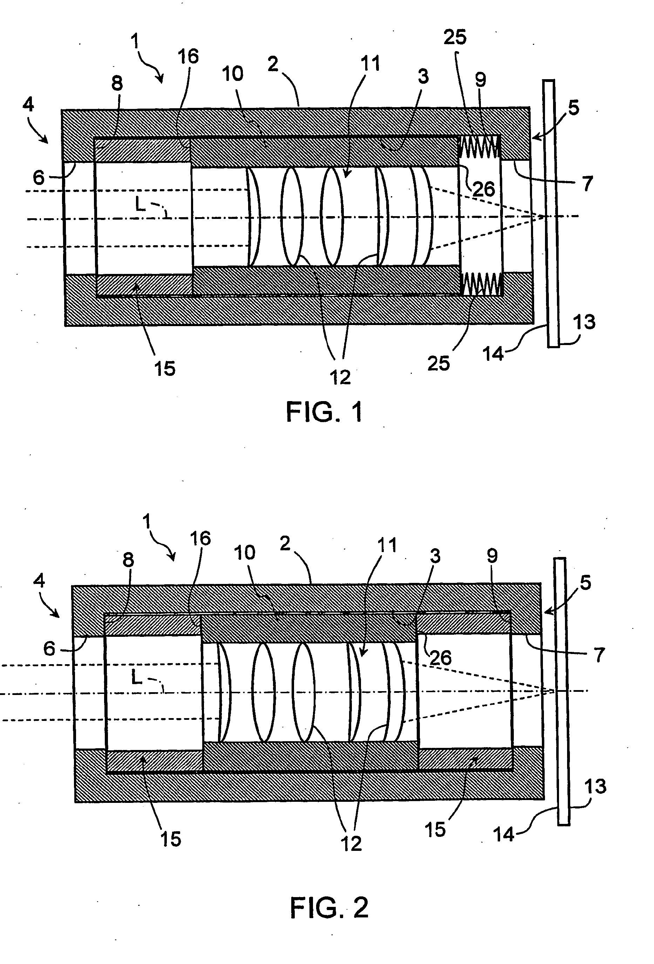

Sur la figure 1 est représenté un système optique 1 comprenant un bâti 2 dans lequel est réalisé un alésage 3 s'étendant suivant un axe L longitudinal, débouchant vers l'extérieur, à deux extrémités 4, 5 du bâti 2, par deux ouvertures 6, 7 réalisées sous la forme de lamages définissant des épaulements 8, 9.

Un support 10, ci-après appelé barillet, est monté dans le bâti 2, coaxialement à l'alésage 3, en étant mobile en translation par rapport au bâti 2. Comme cela est visible sur les figures 1 et 2, le barillet 10 se présente sous la forme d'un cylindre creux, disposé entre les extrémités 4, 5 à une certaine distance des épaulements 8 et 9.

Une optique 11 de focalisation comprenant au moins une lentille 12 (en l'occurrence une succession de lentilles) est montée dans le barillet 10, l'axe focal de l'optique 11 étant sensiblement confondu avec l'axe longitudinal L.

A une extrémité 5 du bâti 2 est disposé un écran 13 dont une face 14, tournée, vers le bâti 2, constitue un plan de focalisation d'un signal lumineux en provenance de l'extrémité opposée 4 et traversant l'optique 11 de focalisation.

Afin de compenser les déformations et les variations d'indice que subissent les lentilles 12 sous l'effet des variations thermiques auxquelles elles sont soumises, ce qui en l'absence de correction entraînerait un défaut de focalisation du signal lumineux, le système 1 comprend en outre un dispositif 15 d'actionnement thermique à bilames, interposé entre le bâti 2 et le barillet 10 (plus précisément, entre l'un des épaulements 8 et une face d'extrémité 16 du barillet 10), et qui déplace celui-ci par rapport au bâti 2 en fonction des variations thermiques.

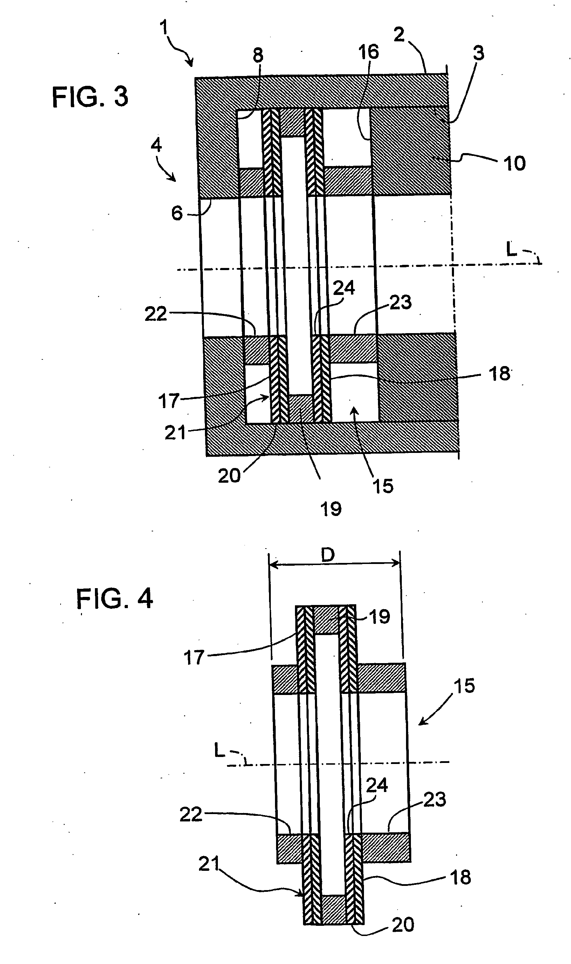

Le dispositif 15 d'actionnement thermique est représenté schématiquement sur la figure 1 sous forme d'un bloc. Sa structure est détaillée sur la figure 3.

Comme cela est visible sur la figure 3, le dispositif 15 d'actionnement thermique comprend deux rondelles bilames 17, 18 coaxiales, dont les axes sont sensiblement confondus avec l'axe L longitudinal, et entre lesquelles est interposée une entretoise 19 sous forme d'un manchon cylindrique creux placé à proximité de bords périphériques 20 des rondelles 17, 18, coaxialement par rapport à celles-ci.

Chaque rondelle bilame 17, 18 est d'un type connu, disponible dans le commerce.

A partir d'une configuration plane, ce type de rondelle se bombe (plus précisément, elle se déforme en tronc de cône) en fonction des variations de température.

La déflexion $A$ de chaque rondelle 17, 18, définie comme le déplacement subi par une face latérale 21 de la rondelle 17, 18, est fournie par la formule suivante :

$$A = \frac{a\left(d2^2 - d1^2\right)}{4,5s} \cdot \Delta T$$

où :

a est la déflexion spécifique de la rondelle, exprimée en $K^{-1}$,
d2 est le diamètre extérieur de la rondelle,
$d$1 est le diamètre intérieur de la rondelle,

$s$ est l'épaisseur de la rondelle, et
$\Delta T$ est la variation de température.

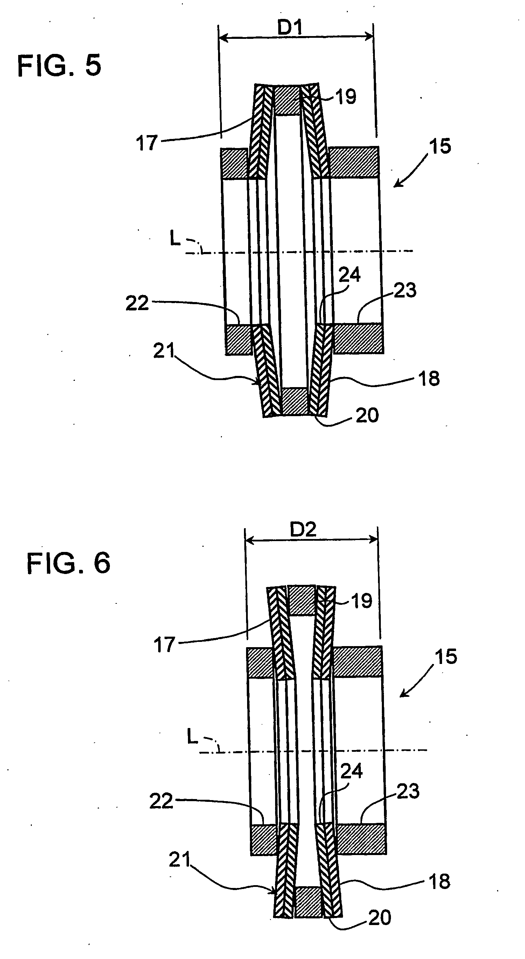

Les rondelles 17, 18 peuvent être choisies strictement identiques. En outre, comme cela est visible sur les figures 5 et 6, elles sont montées en opposition l'une par rapport à l'autre, c'est-à-dire qu'une même variation de température les fait se déformer dans des sens opposés.

De plus, comme cela est représenté sur les figures 4 à 6, le dispositif 15 comporte, outre l'entretoise 19 (dite interne) interposée entre les rondelles 17, 18, une première entretoise externe 22, située du côté de l'une des rondelles 17, opposé à l'entretoise interne 19, ainsi qu'une seconde entretoise externe 23, située du côté de l'autre rondelle 18, opposé à l'entretoise interne 19.

Les entretoises 22, 23 se présentent sous la forme de manchons cylindriques creux coaxiaux aux rondelles 17, 18, placés à proximité d'un bord intérieur 24 de celles-ci, c'est-à-dire qu'elles sont radialement décalées par rapport à l'entretoise interne 19.

Dans le système optique 1, la première entretoise externe 22 est interposée entre l'épaulement 8 et la rondelle 17, tandis que la seconde entretoise externe 23 est interposée entre l'autre rondelle 18 et la face d'extrémité 16 du barillet 10, comme cela est représenté sur la figure 4.

C'est donc par l'intermédiaire des entretoises externes 22, 23 que les rondelles 17, 18 prennent appui, d'une part, sur l'épaulement 8 et, d'autre part, sur le barillet 10.

Ainsi, le dispositif 1 est déformable, en fonction des variations thermiques, entre :

- une première configuration, dite convexe, illustrée sur la figure 5, dans laquelle les rondelles 17, 18 sont bombées à l'opposé l'une de l'autre, le dispositif 15 adoptant en section une forme en O plus ou moins ouvert suivant l'importance de la variation thermique, et
- une seconde configuration, dite concave, illustrée sur la figure 6, dans laquelle les rondelles 17, 18 sont creusées l'une vers l'autre, le dispositif adoptant en section une forme en X plus ou moins aplati suivant l'importance de la variation thermique.

Le sens de la déformation des rondelles 17, 18, dépend de leur sens de montage. Ainsi, suivant un premier mode de réalisation, les rondelles 17, 18 sont montées de telle sorte que la convexité du dispositif 15 s'accroît lorsque la température croît ($\Delta T > 0$), et diminue (c'est-à-dire que sa concavité s'accroît) lorsqu'au contraire la température diminue ($\Delta T < 0$). Suivant un deuxième mode de réalisation, dans lequel le montage des rondelles est inversé par rapport au premier mode de réalisation, les effets produits par les variations de température sont inversés.

Dans l'exemple illustré, le montage est conforme au premier mode de réalisation. Dans la configuration convexe du dispositif 15, obtenue suite à une variation positive de température ($\Delta T > 0$), la dimension axiale D1 du dispositif 15 est égale à sa dimension D à vide (c'est-à-dire sa dimension axiale lorsque les rondelles sont planes, Cf. figure 4), augmentée du double de la déflexion $A$ telle que définie ci-dessus, dans la mesure où les déflexions respectives des rondelles 17, 18 se cumulent. Le déplacement du barillet 10 en direction du plan focal 14, à l'encontre d'une force de rappel exercée par un ou plusieurs ressorts 25 travaillant en compression et interposé(s) entre l'épaulement 9 et une face 26 d'extrémité du barillet 10, opposée à la face 16, est égal à la différence D1-D.

Dans la configuration concave du dispositif 15, obtenue suite à une variation négative de température ($\Delta T < 0$), la dimension axiale D2 du dispositif 15 est égale à sa dimension D à vide diminuée du double de la déflexion $A$ telle que définie ci-dessus, dans la mesure où les déflexions respectives des rondelles 17, 18 se cumulent à l'inverse de la configuration convexe. Le déplacement du barillet 10, dans la direction opposée à celle définie ci-dessus sous l'effet de la détente des ressorts 25, est égal à la différence D-D2.

Le cumul des déflexions des rondelles bilames 17, 18 permet, en comparaison des dispositifs connus, d'obtenir une plus grande amplitude dans les déplacements subis par le barillet 10 sous la poussée du dispositif d'actionnement 15.

De plus, compte tenu de la linéarité de la déflexion des rondelles 17, 18 sur une plage étendue de température (au moins entre -60°C et +100 °C, cette borne supérieure pouvant atteindre 200 °C), on peut connaître avec précision, à l'avance, le déplacement subi par le barillet 10 en fonction de la température, et ainsi adapter ce déplacement de manière à compenser les déformations et variations d'indice subie par le système optique 1.

Plus précisément, il est possible de modifier la loi de déplacement du barillet 10 en jouant sur les paramètres $a$, $d1$, $d2$, et $s$ (c'est-à-dire en choisissant, en fonction des spécifications des lentilles 12 permettant de prévoir leur déformation en fonction des variations de température, les dimensions et les matériaux des rondelles 17, 18).

Il est envisageable, en conservant les fonctions décrites ci-dessus, d'intervertir les localisations radiales respectives de l'entretoise interne 19, que l'on placera ainsi à proximité des bords intérieurs 24 des rondelles 17, 18, et des entretoises externes 22, 23, que l'on placera alors à proximité des bords périphériques 20 des rondelles 17, 18.

Le fonctionnement du dispositif 15 se trouve alors inversé, le déplacement du barillet 10 étant positif (c'est-à-dire en direction du plan focal 14) en configuration concave, et négatif (en direction opposée) en configuration convexe.

Il est également envisageable de coupler plusieurs dispositifs d'actionnement 15, soit en les montant les uns adjacents aux autres afin de cumuler leurs déplacements, soit de les disposer de part et d'autre du barillet 10, comme cela est représenté sur la figure 2 où le ressort de rappel 25 est remplacé par un second dispositif d'actionnement 15 dont le fonctionnement est inversé par rapport à celui du premier, de sorte à assurer un déplacement conjoint, bilatéral, du barillet 10.

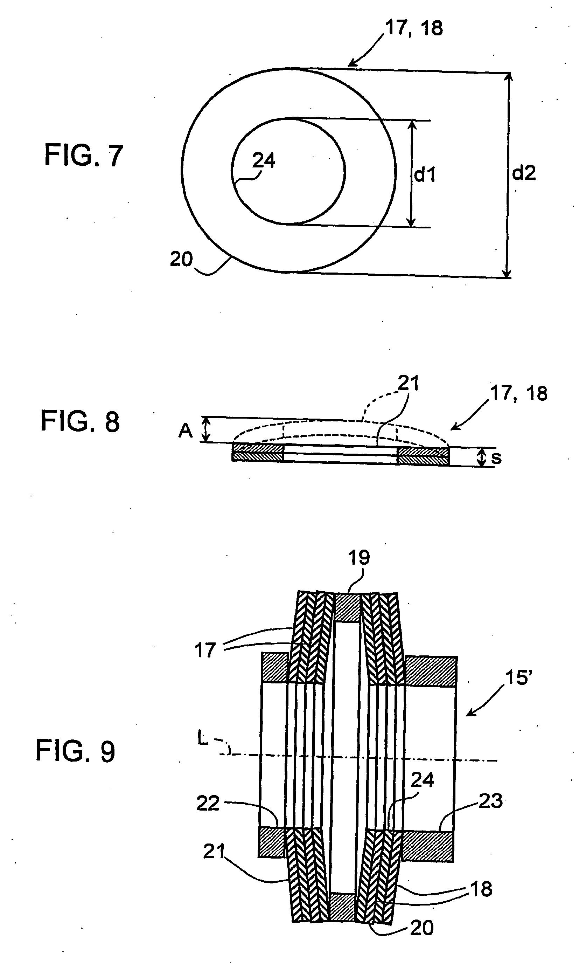

Par ailleurs, suivant une variante de réalisation illustrée sur la figure 9, il est possible de constituer de part et d'autre de l'entretoise 19 des piles de rondelles orientées dans le même sens, afin d'augmenter la raideur mécanique du dispositif 1 et l'adapter ainsi à la résistance opposée par le support 10. Dans l'exemple représenté sur la figure 9, deux paires opposées de rondelles 17, 18 sont disposées de chaque côté de l'entretoise 19, le dispositif 15' obtenu ayant la même déflexion que le dispositif 15 simple décrit ci-dessus, mais une raideur mécanique double.

Comme cela est évoqué en introduction, l'invention n'est pas limitée au domaine de l'optique, donnée à titre d'exemple illustratif dans la description qui précède.

Un dispositif d'actionnement thermique à bilames tel que décrit ci-dessus peut en effet être utilisé dans tout système mécanique nécessitant un déplacement contrôlé, prédéterminé, d'une pièce mobile en fonction des variations de température.

## Revendications

1.  Dispositif (15) d'actionnement thermique comprenant :

    - au moins deux rondelles bilames (17, 18) coaxiales, lesdites rondelles bilames (17, 18) sont montées en opposition l'une par rapport à l'autre, et aptes à se déformer dans des sens opposés en fonction des variations thermiques,
    - au moins une première entretoise axiale (19) interposée entre les rondelles (17, 18),
    - au moins une seconde entretoise (22, 23) située du côté de celle-ci opposé à la première entretoise (19) située entre les rondelles bilames (17, 18),

    **caractérisé en ce que** ladite seconde entretoise (22, 23) est adjacente à l'une des rondelles bilames (17, 18), et est décalée radialement par rapport à la première entretoise (19).

2.  Dispositif (15) selon la revendication 1, apte à se déformer en fonction des variations thermiques, vers :

    - une première configuration, dite convexe, dans laquelle les rondelles (17, 18) sont bombées à l'opposé l'une de l'autre lorsque la variation de température est positive, et
    - une seconde configuration, dite concave, dans laquelle les rondelles (17, 18) sont creusées l'une vers l'autre lorsque la variation de température est négative.

3.  Dispositif (15) selon la revendication 1, apte à se déformer en fonction des variations thermiques, vers :

    - une première configuration, dite convexe, dans laquelle les rondelles (17, 18) sont bombées à l'opposé l'une de l'autre lorsque la variation de température est négative, et
    - une seconde configuration, dite concave, dans laquelle les rondelles (17, 18) sont creusées l'une vers l'autre lorsque la variation de température est positive.

4.  Dispositif (15) d'actionnement thermique selon l'une des revendications 1 à 3, dans lequel la première entretoise (19) est placée à proximité de bords périphériques (20) des rondelles (17, 18) et dans lequel ladite seconde entretoise (22, 23) est placée à proximité d'un bord intérieur des rondelles (17, 18).

5.  Dispositif (15) d'actionnement thermique selon la revendication 1, dans lequel première entretoise (19) est placée à proximité d'un bord intérieur des rondelles (17, 18), et la ladite seconde entretoise (22, 23) est placée à proximité du bord périphérique (20) des rondelles (17, 18).

6.  Dispositif (15) d'actionnement thermique selon la revendication 1, dans lequel l'entretoise (19) se présente sous la forme d'un manchon cylindrique coaxial aux rondelles bilames (17, 18).

7.  Dispositif (15) d'actionnement thermique selon la revendication 1, qui comporte deux entretoises externes (22, 23) placées de part et d'autre des rondelles bilames (17, 18), et décalées radialement par rapport à l'entretoise (19) située entre les rondelles bilames (17, 18).

8.  Dispositif (15) d'actionnement thermique selon la revendication 1, dans lequel le diamètre extérieur de la seconde entretoise (22, 23) est inférieur au diamètre intérieur de la première entretoise (19).

9.  Dispositif (15) d'actionnement thermique selon la revendication 1, dans lequel le diamètre extérieur de la première entretoise (19) est inférieur au diamètre intérieur de la seconde entretoise (22, 23).

10.  Système comprenant :

- un bâti (2),
- une pièce (10) montée mobile en translation par rapport au bâti (2), et
- un dispositif (15) d'actionnement thermique à bilames selon l'une des revendications 1 à 9, interposé entre le bâti (2) et la pièce mobile (10), propre à déplacer celle-ci par rapport au bâti (2) en fonction des variations thermiques.

11. Système selon la revendication 10, qui comprend un ressort de rappel (25) interposé entre le bâti (2) et la pièce mobile (10), et couplé au dispositif (15) d'actionnement thermique.

12. Système selon la revendication 10, qui comprend deux dispositifs (15) d'actionnement thermique disposés de part et d'autre de la pièce mobile (10).

13. Système optique (1) comprenant :

- un bâti (2),
- un support (10) monté mobile en translation par rapport au bâti (2), et sur lequel est montée au moins une lentille (12) ;
- un dispositif (15) d'actionnement thermique à bilames selon l'une des revendications 1 à 9, interposé entre le bâti (2) et le support (10), propre à déplacer celui-ci par rapport au bâti (2) en fonction des variations thermiques.

14. Système optique selon la revendication 13, qui comprend un ressort de rappel (25) interposé entre le bâti (2) et le support (10), et couplé au dispositif (15) d'actionnement thermique.

15. Système optique selon la revendication 13, qui comprend deux dispositifs (15) d'actionnement thermique disposés de part et d'autre du support (10).

**Claims**

1. A thermal actuation device (15) comprising:

- at least two coaxial bimetal disks (17, 18), said bimetal disks (17, 18) are mounted in opposition one with respect to the other and are capable of deforming in opposite directions depending on the thermal variations; and
- at least one first axial keeper (19) interposed between the disks (17, 18);
- at least a second keeper (22, 23) located on the opposite side of the latter to the first keeper (19) located between the bimetal disks (17, 18)

**characterized in that** the second keeper (22, 23) is adjacent one of the bimetal disks (17, 18) and is radially offset relative to the first keeper (19).

2. The device (15) as claimed in claim 1, capable of deforming, depending on the thermal variations, toward:

- a first configuration, called convex configuration, in which the disks (17, 18) are domed away from each other when the temperature change is positive; and
- a second configuration, called concave configuration, in which the disks (17, 18) are dished toward each other when the temperature change is negative.

3. The device (15) as claimed in claim 1, capable of deforming, depending on the thermal variations, toward:

- a first configuration, called convex configuration, in which the disks (17, 18) are domed away from each other when the temperature change is negative; and
- a second configuration, called concave configuration, in which the disks (17, 18) are dished toward each other when the temperature change is positive.

4. The thermal actuation device (15) as claimed in one of claims 1 to 3, in which the first keeper (19) is placed near peripheral edges (20) of the disks (17, 18) and in which the second keeper (22, 23) is placed near an internal edge (24) of the disks (17, 18).

5. The thermal actuation device (15) as claimed in claim 1, in which the first keeper (19) is placed near an internal edge (24) of the disks (17, 18) and the second keeper (22, 23) is placed near the peripheral edge (20) of the disks (17, 18)

6. The thermal actuation device (15) as claimed in claim 1, in which the keeper (19) takes the form of a cylindrical bush coaxial with the bimetal disks (17, 18).

7. The thermal actuation device (15) as claimed in claim 6, which comprises two external keepers (22, 23) placed on either side of the bimetal disks (17, 18) and offset radially with respect to the keeper (19) located between the bimetal disks (17, 18).

8. The thermal actuation device (15) as claimed in claim 1, in which the external diameter of the second keeper (22, 23) is inferior to the interior diameter of the first keeper (19).

9. The thermal actuation device (15) as claimed in claim 1, in which the external diameter of the first keeper (19) is inferior to the interior diameter of the second keeper (22, 23).

**10.** A system comprising:

- a frame (2);
- a part (10) mounted so as to move translationally with respect to the frame (2); and
- a bimetal thermal actuation device (15) as claimed in one of claims 1 to 7, interposed between the frame (2) and the moving part (10), suitable for displacing said moving part relative to the frame (2) according to the thermal variations.

**11.** The system as claimed in claim 10, which includes a return spring (25) interposed between the frame (2) and the moving part (10) and coupled to the thermal actuation device (15).

**12.** The system as claimed in claim 10, which includes two thermal actuation devices (15) placed on either side of the moving part (10).

**13.** An optical system (1) comprising:

- a frame (2);
- a support (10) mounted so as to move translationally with respect to the frame (2), and on which at least one lens (12) is mounted; and
- a bimetal thermal actuation device (15) as claimed in one of claims 1 to 7, interposed between the frame (2) and the support (10), suitable for displacing said support relative to the frame (2) according to the thermal variations.

**14.** The optical system as claimed in claim 13, which includes a return spring (25) interposed between the frame (2) and the support (10) and coupled to the thermal actuation device (15).

**15.** The optical system as claimed in claim 13, which includes two thermal actuation devices (15) placed on either side of the support (10).

**Patentansprüche**

**1.** Thermische Betätigungsvorrichtung (15), die Folgendes enthält:

- mindestens zwei koaxiale Bimetallscheiben (17, 18), wobei die Bimetallscheiben (17, 18) einander entgegengesetzt montiert sind und sich abhängig von den Wärmeschwankungen in entgegengesetzte Richtungen verformen können,
- mindestens einen ersten axialen Abstandshalter (19), der zwischen die Scheiben (17, 18) eingefügt ist,
- mindestens einen zweiten Abstandshalter (22, 23), der sich auf der Seite befindet, die gegenüber dem ersten Abstandshalter (19) ist, der sich zwischen den Bimetallscheiben (17, 18) befindet,

**dadurch gekennzeichnet, dass** der zweite Abstandshalter (22, 23) einer der Bimetallscheiben (17, 18) benachbart und radial bezüglich des ersten Abstandshalters (19) versetzt ist.

**2.** Vorrichtung (15) nach Anspruch 1, die sich abhängig von Wärmeschwankungen verformen kann zu:

- einer ersten so genannten konvexen Konfiguration, in der die Scheiben (17, 18) einander entgegengesetzt gewölbt sind, wenn die Temperaturschwankung positiv ist, und
- einer zweiten so genannten konkaven Konfiguration, in der die Scheiben (17, 18) zueinander vertieft sind, wenn die Temperaturschwankung negativ ist.

**3.** Vorrichtung (15) nach Anspruch 1, die sich abhängig von Wärmeschwankungen verformen kann zu:

- einer ersten so genannten konvexen Konfiguration, in der die Scheiben (17, 18) einander entgegengesetzt gewölbt sind, wenn die Temperaturschwankung negativ ist, und
- einer zweiten so genannten konkaven Konfiguration, in der die Scheiben (17, 18) zueinander vertieft sind, wenn die Temperaturschwankung positiv ist.

**4.** Thermische Betätigungsvorrichtung (15) nach einem der Ansprüche 1 bis 3, bei der der erste Abstandshalter (19) in der Nähe von Umfangsrändern (20) der Scheiben (17, 18) und der zweite Abstandshalter (22, 23) in der Nähe eines Innenrands der Scheiben (17, 18) angeordnet ist.

**5.** Thermische Betätigungsvorrichtung (15) nach Anspruch 1, bei der der erste Abstandshalter (19) in der Nähe eines Innenrandes der Scheiben (17, 18) und der zweiten Abstandshalter (22, 23) in der Nähe des Umfangsrands (20) der Scheiben (17, 18) angeordnet ist.

**6.** Thermische Betätigungsvorrichtung (15) nach Anspruch 1, bei der der Abstandshalter (19) die Form einer zylindrischen Muffe koaxial zu den Bimetallscheiben (17, 18) hat.

**7.** Thermische Betätigungsvorrichtung (15) nach Anspruch 1, die zwei äußere Abstandshalter (22, 23) aufweist, die zu beiden Seiten der Bimetallscheiben (17, 18) angeordnet und bezüglich des zwischen den Bimetallscheiben (17, 18) befindlichen Abstandshalters (19) radial versetzt sind.

8. Thermische Betätigungsvorrichtung (15) nach Anspruch 1, bei der der Außendurchmesser des zweiten Abstandshalters (22, 23) kleiner ist als der Innendurchmesser des ersten Abstandshalters (19).

9. Thermische Betätigungsvorrichtung (15) nach Anspruch 1, bei der der Außendurchmesser des ersten Abstandshalters (19) kleiner ist als der Innendurchmesser des zweiten Abstandshalters (22, 23).

10. System, das Folgendes enthält

    - ein Gestell (2),
    - ein bezüglich des Gestelles (2) translationsbeweglich montiertes Bauteil (10), und
    - eine thermische Betätigungsvorrichtung (15) mit Bimetallelementen nach einem der Ansprüche 1 bis 9, die zwischen das Gestell (2) und das bewegliche Bauteil (10) eingefügt ist und dieses bezüglich des Gestells (2) abhängig von den Wärmeschwankungen verschieben kann.

11. System nach Anspruch 10, das eine Rückstellfeder (25) enthält, die zwischen das Gestell (2) und das bewegliche Bauteil (10) eingefügt und mit der thermischen Betätigungsvorrichtung (15) gekoppelt ist.

12. System nach Anspruch 10, das zwei thermische Betätigungsvorrichtungen. (15) enthält, die zu beiden Seiten des beweglichen Bauteils (10) angeordnet sind.

13. Optisches System (1), das Folgendes enthält

    - ein Gestell (2),
    - einen bezüglich des Gestells (2) translationsbeweglich montierten Träger (10), auf den mindestens eine Linse (12) montiert ist, und
    - eine thermische Betätigungsvorrichtung (15) mit Bimetallelementen nach einem der Anspruche 1 bis 9, die zwischen das Gestell (2) und den Träger (10) eingefügt ist und diesen bezüglich des Gestells (2) abhängig von den Wärmesehwankungen verschieben kann.

14. Optisches System nach Anspruch 13, das eine Rückstellfeder (25) enthält, die zwischen das Gestell (2) und den Träger (10) eingefügt und mit der thermischen Betätigungsvorrichtung (15) gekoppelt ist.

15. Optisches System nach Anspruch 13, das zwei thermische Betätigungsvorrichtungen (15) enthält, die zu beiden Seiten des Trägers (10) angeordnet sind.

FIG. 1

FIG. 2

FIG. 3

FIG. 4

**FIG. 5**

D1

17

19

15

L

22

24

23

21

18

20

**FIG. 6**

D2

17

19

15

L

22

24

23

21

18

20

FIG. 7

FIG. 8

FIG. 9

**EP 1 849 032 B1**

## RÉFÉRENCES CITÉES DANS LA DESCRIPTION

### Documents brevets cités dans la description

- US 4861137 A
- US 6292312 B
- EP 0187232 A